# FASCICULE DE BREVET EUROPEEN

(11) **EP 3 529 574 B1**
(45) Date de publication et mention de la délivrance du brevet: **05.08.2020**
(21) Numéro de dépôt: 17788185.1
(22) Date de dépôt: 17.10.2017
(51) Int. Cl.: G01K 1/14, G01K 1/02, E21B 19/16, G01K 7/02, G01K 7/16, G01J 5/02, G01J 5/04, G01J 5/08, G01J 5/20

(54) **DISPOSITIF DE DÉTERMINATION DE LA QUALITÉ D'ASSEMBLAGE D'UN JOINT FILETÉ TUBULAIRE**
VORRICHTUNG ZUR BESTIMMUNG DER MONTAGEQUALITÄT EINER ROHRVERSCHRAUBUNG
DEVICE FOR DETERMINING THE ASSEMBLY QUALITY OF A TUBULAR THREADED JOINT

(30) Priorité: 19.10.2016 FR 1660122
(43) Date de publication de la demande: 28.08.2019
(73) Titulaire: Vallourec Oil and Gas France, 59620 Aulnoye-Aymeries (FR)
(72) Inventeur: ROUSSIE, Gabriel, 77479 Sugarland (US); BAUDET, Nicolas, 59530 Le Quesnoy (FR); PETERSEN, David, Christian, 3179 Åsgårdstrand (NO)
(74) Mandataire: Casalonga
(86) Numéro de dépôt international: PCT/EP2017/076393
(87) Numéro de publication internationale: WO 2018/073197

(56) Documents cités:
- JP-A- H06 129 571
- JP-A- H06 221 475
- US-A- 4 573 359
- US-A1- 2002 163 181
- US-A1- 2004 223 533
- US-A1- 2007 258 504

## Description

L'invention se place dans le domaine des joints filetés tubulaires et concerne plus précisément un accessoire pour déterminer la qualité de l'assemblage de joints filetés tubulaires.

On entend par joint fileté tubulaire un assemblage par filetage de deux composants tubulaires, un "composant" pouvant être tout élément ou accessoire utilisé pour forer ou exploiter un puits de pétrole et/ou gaz et comprenant au moins une connexion ou connecteur ou encore une extrémité filetée.

Le composant peut être un élément tubulaire de relativement grande longueur (notamment d'environ une dizaine de mètres de longueur), par exemple un tube, ou bien un manchon tubulaire de quelques dizaines de centimètres de longueur, ou encore un accessoire de ces éléments tubulaires (dispositif de suspension ou « hanger », pièce de changement de section ou « cross-over », vanne de sécurité, connecteur pour tige de forage ou « tool joint », « sub », et analogues). Ces composants sont généralement en acier. Le dispositif est particulièrement bien adapté aux éléments en acier inoxydable, ceux à forte teneur en chrome tels que les aciers 13Cr ou CRA ; ces aciers sont particulièrement sensibles au grippage..

Les composants sont généralement assemblés les uns aux autres pour être descendus dans les puits d'hydrocarbures ou des puits similaires et constituer une garniture de forage, une colonne de tubes de cuvelage (« casing ») ou de tubage (« liners ») ou encore une colonne de tubes de production (« tubing ») (colonnes d'exploitation).

La spécification API 5CT émise par l'American Petroleum Institute (API), équivalente à la norme ISO 11960 : 2004 émise par l'International Standardisation Organisation (ISO), régit les tubes utilisés comme casing ou tubing, et la spécification API 5B définit des filetages standards pour ces tubes.

La spécification de l'API 7 définit des connexions filetées à épaulement pour tiges de forage rotatif.

Les fabricants de composants de joints filetés tubulaires ont également développé des joints filetés dits supérieurs (« premium ») qui présentent des géométries spécifiques des filetages, et des moyens spécifiques leur procurant de meilleures performances en service, notamment en matière de résistance mécanique et d'étanchéité et de résistance à la corrosion notamment aux sulfures.

Les composants précités peuvent comporter une extrémité mâle filetée qui est destinée à être vissée à une extrémité femelle filetée d'un autre composant de forage ou d'exploitation, formant un joint assemblé qui doit présenter une grande intégrité mécanique et une étanchéité sous des sollicitations mécaniques très importantes, ainsi qu'une résistance à la corrosion. Il est donc indispensable que leurs extrémités mâle et femelle soient le moins possible endommagées, polluées ou détériorées entre le moment où ils sortent de leur chaîne de fabrication et celui où ils sont utilisés, mais également entre deux utilisations successives. L'utilisation de protecteurs permet de protéger ces éléments contre la corrosion, les poussières et les chocs (ou coups) non seulement le filetage, mais également les éventuelles portée(s) et butée(s) qui ont chacun des fonctions spécifiques et complémentaires, notamment en vue d'assurer une étanchéité en phase d'utilisation. Cependant, il peut arriver qu'une extrémité ait été dégradée sans qu'il ait été possible de le détecter avant l'assemblage. Il est également possible qu'au moment de l'assemblage, les éléments à assembler soient positionnés de manière incorrecte. Il existe alors un risque de grippage au cours de l'assemblage, se traduisant par de possibles déformations plastiques indésirables, des arrachements de matière localisés, au niveau d'une partie d'un filetage, voire au niveau d'autres surfaces fonctionnelles telles qu'une butée ou une portée d'étanchéité. Un tel grippage peut mener à une dégradation des qualités mécaniques ou des qualités d'étanchéité du joint.

Il existe donc un besoin de détecter l'apparition d'un grippage entre surfaces fonctionnelles pendant l'assemblage de deux extrémités de composants tubulaires.

Il est déjà connu dans l'état de la technique, notamment du document JP 6-221475, un procédé de contrôle de l'état de vissage d'un joint fileté tubulaire dans lequel lors de l'opération de vissage, l'amplitude du couple en fonction du nombre de tours de vissage effectués est analysée. La variation de couple est utilisée pour détecter l'apparition d'un grippage. Cependant, ce procédé peut donner lieu à des interprétations erronées, notamment car la variation de couple de vissage dépend des dimensions réelles des filetages dans leurs tolérances d'usinage. De plus, ce procédé est généralement basé sur l'atteinte d'une valeur seuil de couple en fonction de l'état d'avancement du vissage, et la fixation de cette valeur seuil résulte d'un compromis entre la possibilité de détecter tous les cas d'occurrence d'un grippage lors de l'assemblage et la fréquence de détection de résultats « faux positifs », expression qui veut dire que la mise en œuvre du procédé a abouti à un diagnostic de grippage alors qu'il n'y a pas eu réellement de grippage pendant l'assemblage. Il arrive également que la survenue d'un grippage pendant l'assemblage génère une évolution du couple de vissage semblable à un résultat désiré mais sans que les surfaces fonctionnelles telles que butée ou portées ne soient à l'origine du couple généré : le grippage n'est pas détecté par le procédé de JP 6-221475 et le joint formé n'est pas étanche. D'autres dispositifs et procédés de détermination de la qualité d'assemblage de composants tubulaires filetés sont connus dans l'état de la technique antérieure, notamment des documents US 2004/223533 A1, US 2007/258504 A1, JP H06 129571 A, US 4 573 359 A et US 2002/163181 A1.

La présente invention vient améliorer la détection du phénomène de grippage tout en minimisant des détections de « faux positifs ».

Le demandeur a constaté que les déformations plastiques et arrachements de matière qui ont lieu pendant un grippage généraient des échauffements. Par ailleurs, l'opération d'assemblage en soi génère de la chaleur, notamment du fait de surfaces frottant l'une sur l'autre. C'est le cas par exemple de fonds de filets, la portée d'étanchéité, ou d'autres surfaces fonctionnelles de l'extrémité filetée. Ces échauffements sont locaux, mais de part la conduction de chaleur au sein de la matière de l'extrémité filetée, ces échauffements induisent une variation de température au sein de l'extrémité, jusqu'à une surface extérieure de l'extrémité.

Il existe donc une possibilité de détecter le grippage par une méthode et un dispositif qui mesure l'évolution de la température au cours de l'assemblage de deux extrémités filetées, et qui est capable de détecter à partir de ces mesures si une évolution de la température est causée par l'apparition d'un grippage.

Le demandeur a mis au point un dispositif capable de mesurer les variations de températures en plusieurs points d'une surface externe d'une extrémité, de façon à ce que ce dispositif soit utilisable par des opérateurs sur une plate-forme de puits de pétrole.

L'objet de l'invention est un dispositif de détermination de la qualité d'assemblage de composants tubulaires filetés selon l'invention, comprenant :
- un châssis (2) comprenant un espace intérieur cylindrique (20) présentant un axe (21) et agencé pour être monté sur une portion de surface extérieure d'un composant tubulaire fileté ;
- au moins un organe de mesure (3) entre le châssis (2) et l'espace intérieur (20) comprenant une couche de contact (4) comprenant une pluralité de capteurs de température (5) arrangés pour mesurer des grandeurs représentatives de températures en une pluralité d'endroits E(i,j) de la surface extérieure de l'extrémité du composant tubulaire ;
- une première électronique d'acquisition (33) reliée à la pluralité de capteurs (5) et capable de traiter une partie au moins des signaux générés par les capteurs (5).

Dans un mode de réalisation, le dispositif peut comprendre une pluralité de bandes de mesure (31) réparties autour de l'axe (21) du dispositif.

Dans un mode de réalisation, le dispositif peut être un guide de vissage de composants tubulaires d'exploitation du pétrole.

Lesdits capteurs de température (5) peuvent être choisis parmi les thermocouples, les thermistances, les microbolomètres,

Lesdits capteurs de température (5) peuvent être répartis en matrices (51) de capteurs de température (5) sur un substrat flexible.

Dans un mode de réalisation, lesdits capteurs de température (5) peuvent être des thermistances et le substrat flexible être en polyimide.

Ladite couche de contact (4) peut comprendre une couche conductrice thermiquement et isolante électriquement agencée au moins en partie entre les capteurs de température (5) et l'espace intérieur (20).

Ladite couche de contact (4) peut comprendre une couche de protection (41) agencée pour protéger les capteurs de température (5).

Ladite couche de protection (41) peut être une feuille d'acier formée pour présenter un profil arrondi.

Dans un mode de réalisation, le dispositif peut comprendre une couche amortisseuse (9) entre le châssis (2) et la couche de contact (4).

La couche amortisseuse (9) peut comprendre des moyens élastiques choisis parmi les ressorts Garter, les rondelles ressort Clover dome, rondelle ondulée, un ressort en dôme, un matériau élastique, une mousse néoprène ou silicone.

La couche amortisseuse (9) peut comprendre un élément rigide profilé (92).

Le châssis (2) peut comprendre une butée de positionnement (7).

Dans un mode de réalisation, la première électronique d'acquisition (33) peut comprendre une pluralité d'unités électroniques d'acquisition (34) reliées à une électronique de collecte (35) du type circuit électronique programmable FPGA.

Dans un mode de réalisation, le dispositif peut comprendre une deuxième électronique de traitement (36) capable de déterminer l'apparition d'un grippage ou la détérioration d'au moins une portion d'un élément d'un joint tubulaire lors de l'assemblage de deux composants filetés tubulaires selon au moins une loi temporelle de détection.

Ladite première électronique d'acquisition (33) et ladite deuxième électronique de traitement (36) peuvent être connectées par une liaison sans-fil de type Wifi ou Bluetooth ou une liaison filaire de type Ethernet.

La deuxième électronique de traitement peut comprendre un logiciel de traitement et de stockage des mesures.

L'invention est aussi une méthode utilisant le dispositif selon l'invention comprenant les étapes de :
- Déterminer un ensemble de valeurs T₀(i,j) représentatives de températures en une pluralité d'endroits E(i,j) de la surface extérieure d'une extrémité (11) de composant tubulaire au début de son assemblage avec un autre composant tubulaire correspondant ;
- Déterminer un autre ensemble de valeurs T(i,j) représentatives de températures en une pluralité d'endroits E(i,j) de la surface extérieure d'une extrémité (11) au cours de l'assemblage ;
- Calculer la différence entre la température en cours d'assemblage T(i,j) et la température au début d'assemblage T₀(i,j) pour chaque endroit E(i,j)
- Emettre un diagnostic de grippage lorsque la différence T(i,j) - T₀(i,j) dépasse un seuil ΔTₛₑᵤᵢₗ(i,j) prédéfini pour au moins un endroit E(i,j)
Dans une variante, la méthode comprend également l'étape de :
- calcul de la vitesse de variation de température V_{T}(i,j) pour au moins un ensemble d'endroits ΣE(i,j) ;
- Emettre un diagnostic de grippage lorsque la variation de température V_{T}(i,j) dépasse un seuil de variation prédéfini ΔV_{T}(i,j).

D'autres caractéristiques et avantages de l'invention apparaîtront à l'examen de la description détaillée ci-après, et des dessins annexés, sur lesquels :
- la figure 1 illustre une figure schématique d'une partie d'un composant fileté tubulaire et d'une de ses extrémités ;
- la figure 2 illustre une figure schématique partielle en perspective d'un mode de réalisation du dispositif selon l'invention placé autour de l'extrémité femelle d'un composant fileté tubulaire, en position ouverte;
- la figure 3 est une vue en perspective d'un mode de réalisation de l'invention, en position fermée ;
- la figure 4 est une vue en perspective d'une pluralité d'organes de mesures selon un mode de réalisation de l'invention ;
- la figure 5 est une vue en perspective tronquée d'une bande de mesure selon un mode de réalisation de l'invention ;
- les figures 6a et 6b sont des vues en coupe de modes de réalisation de bandes de mesure selon l'invention ;
- la figure 7 est une vue en perspective d'une bande de mesure et d'une électronique d'acquisition non montée sur un châssis, selon un mode de réalisation de l'invention.

Les dessins annexés pourront non seulement servir à compléter l'invention, mais aussi contribuer à sa définition, le cas échéant. Ils ne sont pas limitatifs quant à la portée de l'invention.

L'invention a pour but de déterminer la qualité d'assemblage de deux composants filetés en détectant l'apparition de dommages dans une portion de filetage, et/ou une portée d'étanchéité et/ou une butée pendant l'assemblage de deux extrémités filetées de composants tubulaires en un joint fileté.

On entend par « extrémité femelle » la portion d'un composant munie de surfaces usinées et/ou rectifiées en vue de former un joint avec une portion mâle correspondante et par « corps » la portion d'un composant située au-delà et munie de surfaces venues en général de laminage. Une extrémité femelle a généralement un ou plusieurs filetage(s) situé sur une paroi latérale intérieure et est agencée pour être assemblée à une « extrémité mâle » correspondante a un ou plusieurs filetage(s) correspondants sur une paroi latérale extérieure de composant.

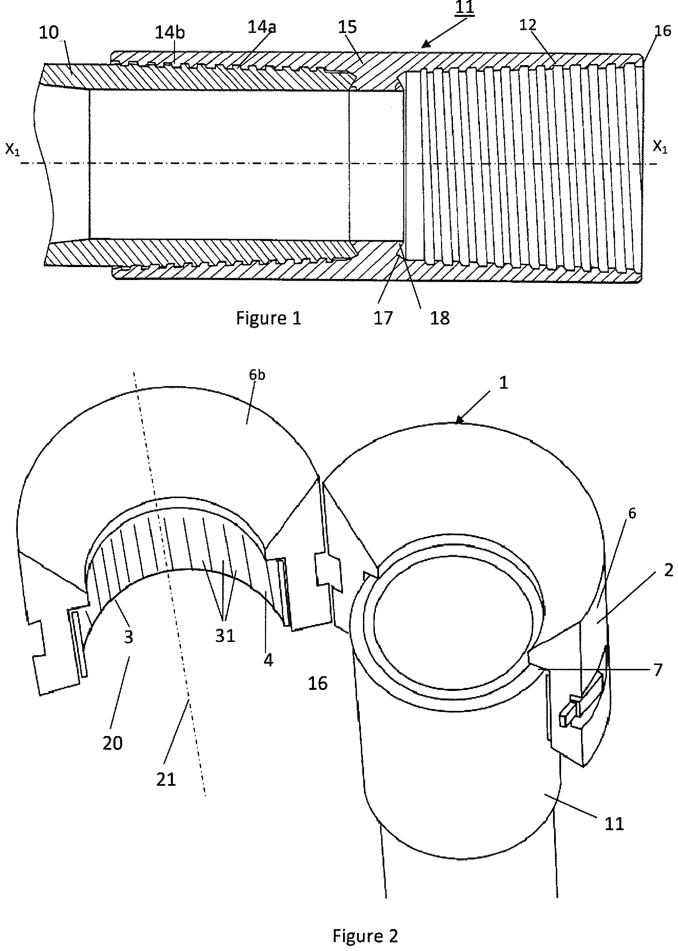

La figure 1 montre un composant tubulaire (10) et une extrémité ou connexion femelle (11). L'extrémité est pourvue d'un filetage (12), et peut comporter également une surface d'étanchéité (17), une butée (18). Certaines connexions peuvent comporter plusieurs filetages ou portées d'étanchéité ou butées. Le composant tubulaire représenté est du type « fileté et manchonné ». En effet, il comprend un tube (10) muni d'un premier filetage externe (14a), et un manchon (15) muni d'un second filetage interne (14b) apte à être vissé sur le premier filetage externe (14a) du tube (10).

Le manchon (15) comprend un filetage (12) destiné à être vissé sur une extrémité d'un autre composant tubulaire. Dans la figure 1, le manchon comprend une extrémité femelle du composant tubulaire (10), et est destiné à être vissé sur une extrémité mâle d'un autre composant tubulaire. Le filetage (12) peut être différent du second filetage interne (14b), autrement dit, le manchon n'est pas forcément symétrique. Le manchon (15) comprend également une face d'extrémité terrain (16) appelée aussi communément en anglais « field-end ».

Alternativement, il existe des composants tubulaires dits « intégraux » qui ne comprennent pas de manchon, et dans lesquels sont directement réalisés les deux extrémités mâle(s) et/ou femelle(s).

Un filetage (12) peut comprendre au moins une portion dite à filets parfaits et le filetage peut aussi comprendre une ou plusieurs portions dites à filets imparfaits ou évanouissants. Les filets imparfaits permettent de réduire l'encombrement du joint fileté et/ou permettent une meilleure circulation d'une éventuelle graisse déposée sur les connexions avant l'assemblage.

Le phénomène de grippage présente plusieurs aspects. Premièrement, il peut toucher les différentes parties fonctionnelles de la connexion : le filetage, au niveau de filets parfaits ou imparfaits, une surface d'étanchéité ou portée d'étanchéité, une butée.

Deuxièmement, le grippage peut être caractérisé par son étendue : il peut concerner une surface d'une partie d'une portion filet, par exemple être un arrachement de matière sur quelques centimètres au niveau d'un flanc d'engagement d'un seul filet parfait, il peut aussi concerner dans des cas plus graves un endommagement de plusieurs filets consécutifs sur un secteur angulaire du filetage, par exemple le grippage peut être une détérioration de 5 filets consécutifs sur un secteur angulaire de 15°.

Le grippage peut également être caractérisé par son intensité. Un grippage très léger permet de retenter directement l'assemblage des composants ; un grippage léger permet une éventuelle réparation manuelle sur chantier de la surface endommagée et une deuxième tentative d'assemblage ; un grippage moyen qui présente un arrachement de matière conduira au rejet du composant tubulaire concerné ; un grippage sévère qui présente un arrachement de matière avec détérioration de la géométrie des surfaces fonctionnelles conduira au rejet du composant tubulaire concerné.

Les composants amenés sur un puits ont subi des transports, des manutentions, des stockages dans des environnements agressifs qui font que l'assemblage de composants ne se fait pas dans des conditions aussi idéales et contrôlées qu'en environnement usine. Les composants peuvent être mal positionnés l'un par rapport à l'autre juste avant leur assemblage. Ces facteurs extérieurs peuvent causer l'apparition de défauts à l'assemblage, selon une probabilité faible mais aux conséquences très graves pour l'intégrité de la colonne de forage et du puits d'exploitation du gaz ou du pétrole.

Sur un puits de forage ou d'exploitation du pétrole, les composants sont assemblés les uns après les autres au dernier composant de la colonne de tube, cette dernière étant descendue progressivement dans le puits. Habituellement, un composant est mis en une position verticale pour l'assemblage, donc il présente une extrémité haute et une extrémité basse qui est destinée à être assemblée à l'extrémité haute du dernier composant introduit dans la colonne. Lors de cette opération, le composant est généralement porté et suspendu par son extrémité haute. Il est guidé par un opérateur qui manipule son extrémité basse.

Pour limiter le balancement du composant, et pour éviter des chocs notamment sur des parties fonctionnelles des extrémités à assembler entre elles, des guides de vissage sont couramment utilisés.

Un guide de vissage (appelé couramment « stabbing guide » dans le domaine technique des composants tubulaires pour puits de pétrole et gaz) comprend généralement une partie de guidage conique destinée à amener une extrémité mâle en position pour l'assemblage sur l'extrémité femelle correspondante. Ce dispositif a pour vocation également de protéger des chocs le filetage de l'extrémité mâle lors de la phase d'approche. Le brevet US 4,599,778 décrit un tel guide de vissage.

Le demandeur a trouvé qu'il était particulièrement utile d'intégrer le dispositif de l'invention dans un guide de vissage, car cela permet de diminuer le nombre d'équipements et d'opérations à réaliser lors de l'assemblage de composants tubulaires et parce que cela a pour effet de diminuer les risques de mauvais positionnement du dispositif selon l'invention.

Le dispositif d'assemblage (1) de l'invention de la figure 2 comprend un châssis (2) apte à être positionné et monté sur une extrémité de composant tubulaire (11). Le châssis présente un axe (21) et un espace intérieur sensiblement cylindrique (20) pouvant recevoir une partie d'un élément tubulaire cylindrique. Le châssis (2) est généralement réalisé en deux parties pour faciliter sa manipulation autour d'un élément tubulaire. Les deux parties peuvent être montées en liaison pivot l'une par rapport à l'autre.

Le châssis (2) peut comprendre une butée de positionnement (7) permettant le placement adéquat, en particulier axial, du châssis (2). Lorsque le dispositif est destiné à être utilisé sur des connexions du type fileté et manchonné, la butée de positionnement (7) est agencée pour pouvoir s'appuyer sur la face d'extrémité terrain (16). La butée de positionnement (7) permet de positionner axialement de manière répétable le dispositif, et donc de connaître avec plus de précision le positionnement axial de capteurs de température (5) (non visibles sur la figure 2) par rapport aux surfaces fonctionnelles du joint.

Le dispositif d'assemblage (1) comprend également un organe de mesure (3). L'organe de mesure (3) a une forme intérieure sensiblement cylindrique, de façon à être proche de la forme de la surface extérieure de l'extrémité de composant tubulaire (11), ou encore de façon à pouvoir épouser la surface extérieure de l'extrémité de composant tubulaire (11). L'organe de mesure (3) est donc positionné entre le châssis (2) et l'espace intérieur (20).

L'organe de mesure (3) comprend au moins une bande de mesure (31). La figure 2 représente plusieurs bandes de mesures (31). Les bandes de mesure (31) sont généralement réparties de façon à couvrir une grande partie de la surface latérale extérieure d'une extrémité. Chaque bande de mesure (31) comprend une couche de contact (4) comprenant une pluralité de capteurs de température (5) destinés à mesurer des grandeurs représentatives de températures en une pluralité de points de la surface extérieure de l'extrémité de composant tubulaire (11). La couche de contact (4) intégrée sur le châssis (2) présente l'avantage d'une solution compacte et ne prenant pas de place sur une plate-forme comparativement à un système à caméras thermiques. Cela présente plusieurs avantages : Un système utilisant des caméras thermiques nécessiterait 3 caméras thermiques pour faire des mesures à 360° autour du composant tubulaire, est difficile à mettre en œuvre sur un chantier, et les caméras peuvent être masquées par des outils ou des opérateurs. De plus, la couche de contact (4) est protégée par le châssis (2) des rayonnements de chaleur extérieurs dus aux opérateurs, au soleil, aux équipements alentours du puits.
Les bandes de mesure (31) du mode de réalisation de la figure 2 sont agencées verticalement et réparties radialement. Alternativement, elles peuvent être agencées horizontalement et réparties axialement. L'agencement vertical a pour avantage de permettre de réaliser des bandes de mesures identiques entre elles pour des dispositifs adaptés à différents diamètres extérieurs de tubes ou extrémités.

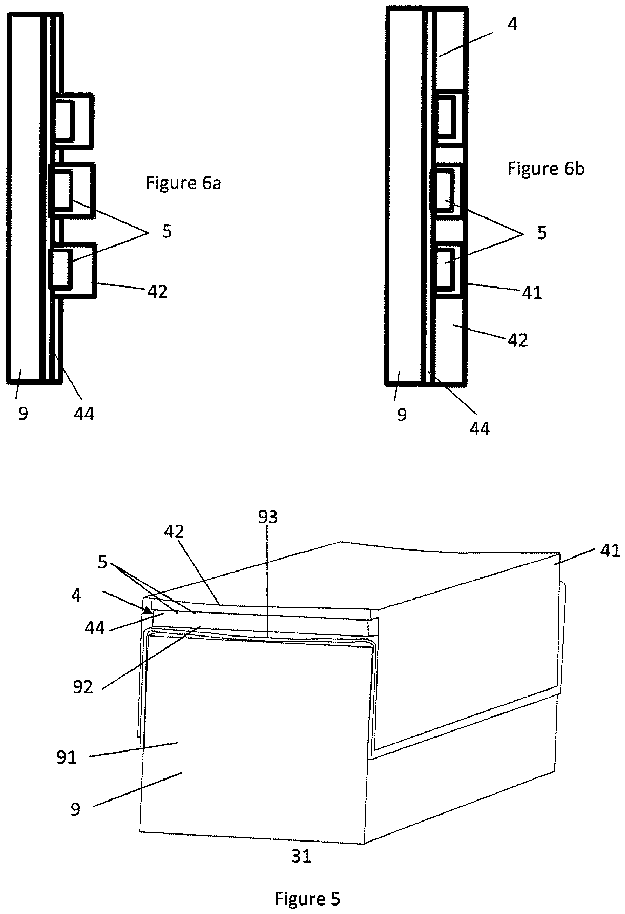

La figure 5 est une vue en perspective coupée d'une bande de mesure (31). Une bande de mesure (31) comprend une pluralité de capteurs de températures (5) répartis sur un substrat (44). Le substrat (44) facilite l'assemblage de la couche de contact (4) et améliore la précision de positionnement des capteurs (5). De manière avantageuse, le substrat (44) est un substrat flexible. La flexibilité du support (44) permet de faciliter le positionnement des capteurs sur la surface extérieure d'une l'extrémité (11) de composant tubulaire. Le montage peut être effectué par collage ou soudage, Le substrat flexible (44) peut par exemple être une feuille en polyimide comme le Kapton commercialisé par la société DuPont.

Dans une première variante, la couche de contact (4) comprend des capteurs de température (5) de type thermistances.

Dans une deuxième variante, la couche de contact (4) comprend des capteurs de température (5) de type thermocouples. Par exemple, des thermocouples du type TC2741 commercialisés par la société Minco Products Inc. Dans cette variante, la couche de contact (4) peut comprendre un film thermocouple.

Dans une troisième variante, la couche de contact (4) comprend des capteurs de température (5) de type microbolomètres. Par exemples des modèles commercialisés par la société INO. Le bolomètre permet de faire une mesure de température à partir d'une énergie de rayonnement. Le principe du bolomètre est de convertir une énergie de rayonnement atteignant un matériau absorbant lié en général à une thermistance, en propriété électrique représentative du rayonnement. Dans cette dernière variante, la couche de contact (4) peut ne pas être en contact avec la surface extérieure de l'extrémité de composant tubulaire et maintenir un niveau de performance de mesure acceptable, les bolomètres ne devant pas être en contact avec la surface objet de la mesure, les bolomètres faisant une mesure des émissions infrarouge. L'emploi du bolomètre permet donc de s'affranchir de problèmes de qualité de mesure liés aux éventuels défauts géométriques de la surface extérieure de l'extrémité de composant tubulaire (11). Lorsque des bolomètres sont utilisés, il n'est pas possible d'utiliser une couche de protection au droit des surfaces de mesure des microbolomètres. Si une couche de protection est utilisée, elle doit être ajourée de manière à ne pas couvrir les microbolomètres. Les capteurs de type microbolomètres présentent cependant un désavantage par rapport aux thermocouples et thermistances en ce qu'ils sont très sensibles aux salissures.

Dans une autre variante, la couche de contact (4) peut comprendre une combinaison de différents types de capteurs choisis parmi les thermocouples, thermistors et bolomètres.

La couche de contact (4) représentée en figure 5 comprend en outre une couche de protection (41) protégeant les capteurs contre l'usure. La couche de protection (41) peut être réalisée sous la forme d'une feuille métallique, qui permet une bonne protection contre les chocs, les frottements et l'usure. Le matériau de type métal est privilégié car le même matériau que celui des composants tubulaires et a donc un comportement proche en termes de conduction thermique. La feuille métallique peut être d'épaisseur faible de façon à présenter une certaine flexibilité. La feuille métallique (41b) peut être formée de façon à présenter un profil sensiblement arrondi de façon à mieux épouser le contour arrondi de la surface d'un composant tubulaire.

La couche de contact (4) peut comprendre également une couche conductrice thermiquement et isolante électriquement (42) recouvrant la surface réceptrice des capteurs (5), de façon à être positionnée entre un capteur et la surface extérieure de l'extrémité de composant (11) et afin de mieux conduire la chaleur vers le capteur. La couche conductrice thermiquement et isolante électriquement (42) peut être flexible pour améliorer la capacité de l'organe de mesure (3) à épouser la surface extérieure du composant tubulaire et à assurer un couplage optimum entre les capteurs (5) et la surface à mesurer. Des exemples de matériaux adéquats sont les produits PC94 et PC93 de l'entreprise t-Global Technology, ou encore le TPCM FSF-52 de Laird Technology. Lorsqu'une couche de protection (41) est présente, la couche conductrice thermiquement et isolante électriquement (42) est située entre la couche de protection (41) et le substrat (44).

Comme cela est visible sur la figure 6b, la couche de contact (4) peut également comprendre une couche d'isolation (44) permettant d'isoler thermiquement les capteurs de température (5). Cette couche d'isolation est agencée de manière à isoler thermiquement les capteurs à l'exception d'une surface fonctionnelle de mesure et définissant une direction de mesure, généralement tournée vers la surface dont la température est à mesurer. La couche d'isolation permet d'améliorer le ciblage de la mesure.

Dans un mode de réalisation, comme représenté en figure 5, le dispositif selon l'invention peut comprendre en outre une couche amortisseuse (9) entre le châssis (2) et la couche de contact (4). Cette couche a des propriétés extensibles et présente une certaine élasticité, en effet, ladite couche amortisseuse (9) a pour rôle de maintenir le contact entre la couche de contact (4) et la surface extérieure de l'extrémité de composant tubulaire (11), en compensant les variations dimensionnelles de ladite extrémité, telles que des variations liées aux tolérances de diamètres, des défauts de cylindricité.

Dans une variante, la couche amortisseuse (9) comprend un matériau élastique tel que du silicone ou une mousse néoprène.

Dans d'autres variantes, la couche amortisseuse (9) peut comprendre des ressorts choisis parmi les rondelles ressort Clover dome, rondelles ondulées, ressorts en dôme, ressorts Garter.

La couche amortisseuse (9) peut comprendre en outre en combinaison avec l'une des variantes mentionnées ci-dessus, un support rigide (92) entre un support élastique reprenant une structure élastique décrite ci-avant et la couche de contact (4). Le support rigide (92) est alors situé entre le support élastique (91) de la couche amortisseuse (9) et la couche de contact (4). Celui-ci peut présenter une surface intérieure de forme concave (93) située contre la couche de contact (4) de manière à conférer à la couche de contact (4) une forme concave qui permet à la couche de contact de mieux épouser la surface extérieure convexe du composant tubulaire.

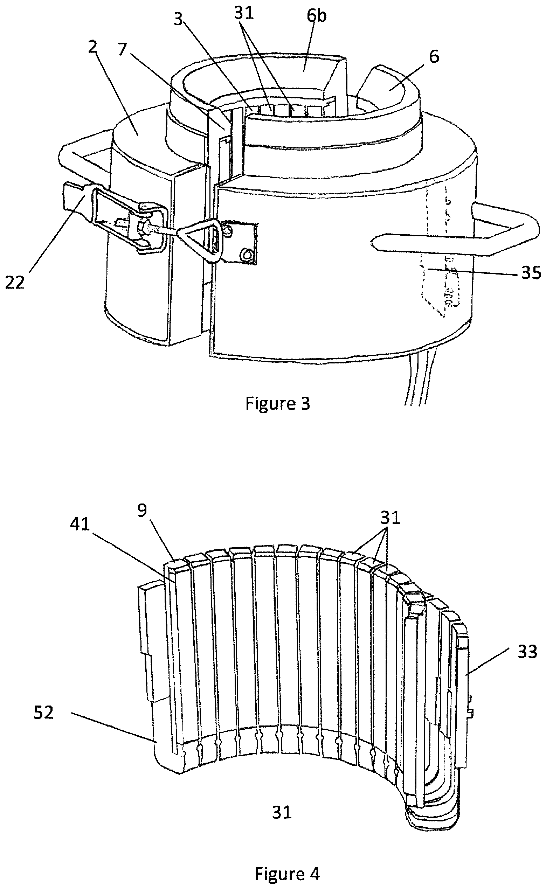

Dans le mode de réalisation du dispositif dont les bandes de mesure sont représentées en figure 4 et 5, le dispositif selon l'invention comprend une pluralité d'organes de mesure sous forme de bandes de mesures (31) répartis sur une circonférence entourant l'espace intérieur (20).

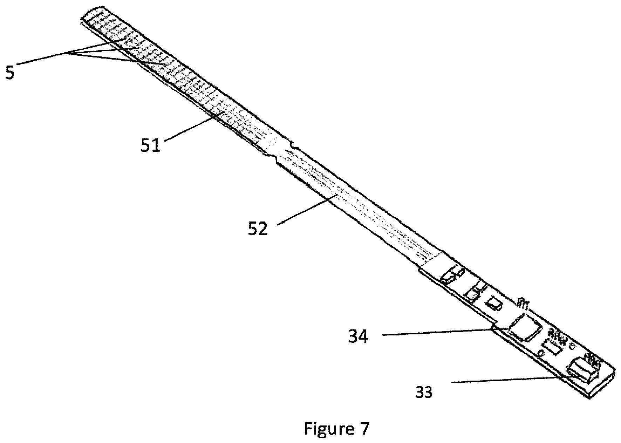

Comme montré sur la figure 7, chaque bande de mesure (31) de l'organe de mesure (3) comprend une couche de contact (4) comprenant une pluralité de capteurs (5) montés sur une couche de support (44) destinés à mesurer des grandeurs représentatives de températures en une pluralité de points de la surface extérieure de l'extrémité de composant tubulaire (11). Cette pluralité de capteurs est organisée en matrice à l'intérieur de chaque bande de mesure (31) de l'organe de mesure (3). Par exemple, chaque matrice peut comprendre 8 colonnes de 32 capteurs. Dans chaque bande de mesure (31), une matrice (51) de capteurs de température (5) est reliée par une bande de liaison souple (52) à une unité électronique d'acquisition (34). La bande de liaison souple facilite une intégration compacte de l'électronique dans le dispositif de mesure.

Chaque électronique d'acquisition (34) du dispositif fait partie de la première électronique d'acquisition (33). Chaque unité électronique d'acquisition (34) est reliée à une électronique de collecte. La première électronique d'acquisition comprend donc une ou plusieurs unités électroniques d'acquisition et une électronique de collecte (35) visible en figure (3).

Chaque bande de mesure (31) comprend une couche de contact (4). Ceci permet d'améliorer le couplage des matrices de capteurs (5) avec la surface extérieure du composant tubulaire. Ceci permet également de découpler thermiquement les matrices de capteurs entre elles, ce qui peut être avantageux lorsque la résolution est faible.

Chaque bande de mesure (31) comprend une couche amortisseuse (9). Ceci permet en partie de dissocier mécaniquement les matrices de capteurs (5) de façon à avoir un meilleur couplage de chaque matrice de capteur avec la surface du composant tubulaire à mesurer malgré des défauts géométriques du composant.

Dans le mode de réalisation de la figure 5, la couche amortisseuse (9) comprend une mousse néoprène. La couche amortisseuse (9) comprend également un support rigide (92) sous forme d'une feuille métallique conformée.

Dans le mode de réalisation représenté en figure 4 et 5, les bandes de mesure (31) sont agencées pour être réparties sur une circonférence. Alternativement, les bandes de mesure (31) pourraient être arrangés pour être répartis axialement. Le mode représenté est avantageux industriellement car il permet de réaliser des organes de mesure standardisés. Le dispositif selon l'invention est ensuite adapté selon le diamètre du composant tubulaire à mesurer par le nombre de segments (31) installés : plus le diamètre est grand, plus de bandes de mesures (31) unitairement identiques peuvent être installées.

Avantageusement, le dispositif selon l'invention est un guide de vissage (ou stabbing guide) et comprend une portion supérieure (6) comprenant des moyens de guidage d'une extrémité de composant mâle. Par exemple cette partie comprend une surface intérieure conique (6b) définissant un espace intérieur conique. La portion est dite supérieure car cette partie est la partie disposée vers le haut lors de l'utilisation normale sur chantier du guide de vissage, un composant étant amené généralement par le haut pour être vissé à un composant tubulaire de la colonne de forage.

Le châssis (2) et au moins un organe de mesure (3) sont alors compris dans une portion inférieure du guide de vissage et agencés pour que l'espace intérieur conique (6b) de la portion supérieure s'ouvre dans le prolongement de l'espace intérieur cylindrique (20). Ainsi, le dispositif selon l'invention est intégré à un outil dont l'utilisation est familière de l'opérateur sur chantier. Ceci permet donc de simplifier l'utilisation sur chantier du dispositif selon l'invention.

Avantageusement, le dispositif d'assemblage selon l'invention comprend des moyens de positionnement du dispositif de manière à ce que la portion de mesure soit correctement positionnée sur la surface extérieure de l'extrémité femelle du composant, au niveau d'au moins une partie du filetage. On entend par « au niveau de » un positionnement axial relativement au composant tubulaire tel qu'un rayon partant de l'axe et passant par cette partie fonctionnelle passe également par la portion de mesure « au niveau » de la partie fonctionnelle. Un positionnement correct et répétable permet de minimiser l'influence de ce positionnement sur les mesures représentatives de la température qui sont effectuées. Ce moyen de positionnement peut être une butée de positionnement (7). Pour une utilisation du dispositif sur un joint de type fileté manchonné, cette butée de positionnement (7) peut être agencée de manière à venir en appui sur la face d'extrémité de terrain (ou *field end*) du manchon. On comprendra que cette butée peut être agencée différemment selon les géométries du joint. S'il s'agit d'un joint intégral muni d'une portion de rengraissement, la butée peut avoir une forme complémentaire de la surface extérieure dudit rengraissement ou d'une variation de diamètre extérieur du joint. Alternativement, la butée peut être remplacée par un repère visuel qui peut être utilisé par l'opérateur pour aligner axialement le dispositif, par exemple en plaçant le repère visuel à hauteur de l'extrémité de la connexion femelle.

Le dispositif selon l'invention peut être muni de moyens de fermeture aptes à fermer et maintenir fermé le guide de vissage autour du composant tubulaire, ou apte à s'ouvrir de manière à dégager le dispositif du composant tubulaire après utilisation. Les moyens de fermeture peuvent être agencés de manière à fournir au dispositif une force de serrage suffisante pour permettre au dispositif de tenir sur le composant tubulaire sans aide extérieure et assurer la mise en contact de la couche de contact (4) avec le composant tubulaire, notamment par la compression de la couche amortisseuse. Les moyens de fermeture du dispositif sont classiques de ceux des guides de vissage déjà utilisés sur chantier. Un moyen de fermeture peut être une attache (22) à levier de la figure 3. Alternativement, une attache peut aussi être une attache du type décrit dans le brevet US 4,599,778.

Selon un aspect représenté en figure 7, le dispositif d'assemblage selon l'invention comprend sur chaque bande de mesure (31) une première électronique d'acquisition (33) reliée à la pluralité de capteurs (5) disposés dans la couche de contact (4). De préférence, les capteurs (5) sont disposés en matrice de capteurs (51).

La première électronique d'acquisition (33), reliée aux capteurs (5) d'une bande de mesure (31), collecte les signaux desdits capteurs (33). La première électronique d'acquisition (33) peut comporter sur chaque bande de mesure (31) une unité électronique d'acquisition (34) recueillant les signaux représentatifs de température des capteurs (5) de la bande de mesure (31) sur lequel est agencée l'unité (34) ; et la première électronique d'acquisition (33) peut comporter alors aussi une unité électronique de collecte (35) qui collecte l'ensemble des données issues des différentes unités électroniques d'acquisition (34). Ainsi, chaque unité électronique d'acquisition (34) est apte à convertir des signaux représentatifs de températures issus des capteurs (5) en un flux de données qui est ensuite transmis par une liaison asynchrone vers l'unité électronique de collecte (35). Par exemple, la liaison asynchrone est du type RS232, l'unité électronique de collecte (35) est une carte électronique du type FPGA. La première électronique d'acquisition (33) comprend un moyen d'alimentation des capteurs, un module de conversion du signal analogique / numérique, un moyen de traitement et un moyen de communication.

La première électronique d'acquisition (33) est apte à associer à chaque signal une position correspondante de capteur, de sorte à établir une matrice position - température- dont les valeurs T(i,j) sont représentatives de températures mesurées et où i et j sont les indices de position des différents capteurs de la couche de contact (4). On désigne aussi une position en tant qu'endroit E(i,j).

Ainsi, en pratique, l'acquisition s'effectue simultanément sur l'ensemble des bandes de mesure (31) du dispositif à une cadence définie. Par exemple, la cadence peut être de 3 à 5 trames par seconde. Chaque unité électronique d'acquisition (34) constitue une trame unitaire. Chaque trame unitaire est collectée par l'unité électronique de collecte (35) qui reconstruit une trame globale. Chaque trame est constituée de la matrice globale regroupant l'ensemble des valeurs T(i,j) fournies par chaque capteur de chaque segment. Chaque trame globale est horodatée et contient également des signalisations d'erreurs (erreur d'acquisition, défaillance capteur, défaillance d'un segment, etc.). La trame globale peut ensuite être utilisée pour déterminer la qualité d'assemblage de composants tubulaires.

Cette première électronique d'acquisition peut être reliée à un système permettant d'afficher une image représentative des températures aux différents endroits E(i,j) par exemple pour que l'opérateur puisse visualiser les échauffements lors de l'assemblage.

Alternativement ou en complément, la première électronique d'acquisition (33) peut être reliée à une deuxième électronique de traitement (36).

La première électronique d'acquisition (33) est reliée à a deuxième électronique de traitement (36) par un moyen de communication. Ce moyen peut être filaire, tel qu'une liaison Ethernet. Dans ce cas, il est possible que l'alimentation électrique des capteurs soit effectuée via la liaison Ethernet selon le principe du PoE. Alternativement, ce moyen de communication peut être sans fil. Par exemple, les protocoles Wi-fi ou Bluetooth peuvent être utilisés. Le dispositif d'assemblage peut alors être doté de batteries électriques pour alimenter les capteurs (5) et la première électronique d'acquisition (33).

La deuxième électronique de traitement a pour fonction principale d'exécuter des lois de détermination de l'apparition de grippage. Cette deuxième électronique peut être déportée, pour permettre d'employer des moyens de calculs plus puissants qu'une électronique embarquée autonome sur le châssis (2). Un autre avantage lié est la possibilité d'employer une mémoire plus importante qui peut contenir une base de données composée des valeurs critiques pour plusieurs endroits de plusieurs modèles et diamètres de connexions filetées. Ces valeurs critiques sont principalement déterminées expérimentalement sur une série de vissages pour différents modèles ou diamètres de connexion, vissages pour lesquels des anomalies de vissages sont créées artificiellement afin de provoquer des grippages de différente sévérité. Ces valeurs critiques peuvent être des seuils pertinents vis-à-vis de lois temporelles d'évolution de températures de différents endroits E(i,j) ou groupes d'endroits ΣE(i,j).

Ces valeurs critiques varient en fonction du matériau utilisé et des géométries de chaque connexion qui imposent des conditions sur les frottements tels que coefficient de frottement, état de surface, pression de contact, et donc influent sur les échauffements générés. C'est pour cela qu'il s'avère nécessaire de construire une base de données des différents seuils d'échauffement selon les modèles de connexion, afin de fiabiliser encore plus la détection de défauts à l'assemblage.

Selon un aspect de l'invention, la deuxième électronique de traitement (36) peut être dotée d'une loi temporelle de mesure de l'évolution des températures T(i,j), qui détermine une éventuelle alerte de grippage en fonction de l'évolution des températures T(i,j). Plusieurs lois temporelles sont détaillées ci-après.

Une loi de détection peut également être utilisée non plus sur chaque endroit E(i,j) mais sur des ensembles d'endroits ΣE(i,j) contigus de manière à appliquer la loi sur des zones de la connexion et non en des endroits précis. Cela permet à la loi de seuil non seulement de détecter des grippages pendant l'assemblage mais aussi de qualifier une sévérité de grippage par la détermination d'une taille de la zone présentant un échauffement anormal.

Pour cela, en pratique, la surface à mesurer est divisée en secteurs Sₖ. Chaque secteur Sₖ contient un ensemble de capteurs C(i,j) correspondants aux endroits E(i,j) du groupe ΣE(i,j). La moyenne de température Tₖ sur chaque secteur est calculée sur la base des valeurs T(i,j) ⊂ Sₖ.

Il est aussi possible de découper plusieurs fois la surface à mesurer en secteurs Sₖ de manière à réaliser des découpages avec des tailles de secteurs différentes.

Un premier découpage peut se faire en secteurs Sₖ rectangulaires d'une largeur correspondant à la largeur d'un filet et une longueur correspondant à une largeur d'une bande de mesure. Un deuxième découpage peut se faire en secteurs S'ₖ rectangulaires d'une largeur correspondant à la largeur de 5 filets et une longueur correspondant à une largeur d'une bande de mesure. Ces exemples sont illustratifs, mais les secteurs peuvent être définis par une forme quelconque adaptée au modèle de connexion sur lequel les mesures sont effectuées.

Dans une première variante, la deuxième électronique de traitement (36) est dotée d'une loi à seuil. La température mesurée en un endroit E(i,j) de la surface par l'organe de mesure (3) varie entre une température T(i,j)[to] initiale au début de l'assemblage et la température T(i,j)[t] en cours de vissage à l'instant [t]. Lorsque la température T(i,j)[t] atteint ou dépasse T(i,j)[t₀] + ΔTₛₑᵤᵢₗ(i,j), le dispositif envoie l'information à l'utilisateur de l'apparition d'un grippage.

Dans une approche simple, des résultats satisfaisants ont été obtenus en fixant cette valeur seuil ΔTₛₑᵤᵢₗ à 10°C au niveau du filetage. Des résultats satisfaisants ont été obtenus en fixant cette valeur seuil à 3°C ou à 6°C au niveau d'une portée d'étanchéité.

Par exemple, avec une connexion ayant pour un endroit E(i,j) une température initiale de 30°C avant vissage sur une portion de surface extérieure du composant en regard du filetage, l'atteinte d'une valeur supérieure ou égale à 40°C au même endroit E(i,j) a pu traduire l'apparition d'un grippage au niveau d'un filet.

On comprend aussi que la valeur seuil est dépendante de l'endroit E(i,j) considérée, en ce qu'elle correspond à une surface en regard d'un filet parfait, d'un filet imparfait, de portée ou de butée.

Dans une autre variante, la vitesse de variation de la température V_{T}(i,j) est calculée et lorsque la vitesse de variation dépasse un seuil défini ΔV_{T}(i,j) pour un nombre minimal de valeurs V_{T}(i,j) d'une zone ΣE(i,j), une alerte de grippage est donnée. Le seuil ΔV_{T}(i,j) est défini en fonction de la connexion, éventuellement de la vitesse de vissage. On comprendra par exemple qu'un tube de petit diamètre peut être vissé plus vite qu'un tube de gros diamètre.
Dans une autre variante, des lois à seuil sur la variation de température et la vitesse de variation de température telles que décrites précédemment peuvent être utilisées en parallèle ou en combinaison pour détecter l'apparition d'un grippage.

Dans un autre mode de réalisation, l'algorithme de détection est combiné à la détection au couple par tour de façon à améliorer encore la précision de la détection.

## Revendications

1. Dispositif de détermination de la qualité d'assemblage de composants tubulaires filetés, comprenant :
- un châssis (2) comprenant un espace intérieur cylindrique (20) présentant un axe (21) et agencé pour être monté sur une portion de surface extérieure d'un composant tubulaire fileté ;
- au moins un organe de mesure (3) entre le châssis (2) et l'espace intérieur (20) comprenant une couche de contact (4) comprenant une pluralité de capteurs de température (5) arrangés pour mesurer des grandeurs représentatives de températures en une pluralité d'endroits E(i,j) de la surface extérieure de l'extrémité du composant tubulaire ;
- une première électronique d'acquisition (33) reliée à la pluralité de capteurs (5) et capable de traiter une partie au moins des signaux générés par les capteurs (5).

2. Dispositif selon la revendication 1 dans lequel au moins un organe de mesure (3) comprend une pluralité de bandes de mesure (31) réparties autour de l'axe (21) du dispositif.

3. Dispositif selon l'une des revendications précédentes **caractérisé en ce que** le dispositif est un guide de vissage de composants tubulaires d'exploitation du pétrole.

4. Dispositif d'une des revendications précédentes **caractérisé en ce que** les capteurs de température (5) sont choisis parmi les thermocouples, les thermistances, les microbolomètres,

5. Dispositif d'une des revendications 1 à 3 dans lequel les capteurs de température (5) sont répartis en matrices (51) de capteurs de température (5) sur un substrat flexible.

6. Dispositif selon la revendication précédente dans lequel les capteurs de température (5) sont des thermistances et le substrat flexible est en polyimide.

7. Dispositif selon l'une des revendications précédentes **caractérisé en ce que** la couche de contact (4) comprend une couche conductrice thermiquement et isolante électriquement agencée au moins en partie entre les capteurs de température (5) et l'espace intérieur (20).

8. Dispositif selon l'une des revendications précédentes **caractérisé en ce que** la couche de contact (4) comprend une couche de protection (41) agencée pour protéger les capteurs de température (5).

9. Dispositif selon la revendication précédente dans lequel la couche de protection (41) est une feuille d'acier formée pour présenter un profil arrondi.

10. Dispositif selon l'une des revendications précédentes **caractérisé en ce que** le dispositif comprend une couche amortisseuse (9) entre le châssis (2) et la couche de contact (4).

11. Dispositif selon la revendication précédente **caractérisé en ce que** la couche amortisseuse (9) comprend des moyens élastiques choisis parmi les ressorts Garter, les rondelles ressort Clover dome, rondelle ondulée, un ressort en dôme, un matériau élastique, une mousse néoprène ou silicone.

12. Dispositif selon l'une des revendications 10 ou 11 **caractérisé en ce que** la couche amortisseuse (9) comprend un élément rigide profilé (92).

13. Dispositif selon l'une des revendications précédentes dans lequel le châssis (2) comprend une butée de positionnement (7).

14. Dispositif selon l'une des revendications précédentes dans lequel la première électronique d'acquisition (33) comprend une pluralité d'unités électroniques d'acquisition (34) reliées à une électronique de collecte (35) du type circuit électronique programmable FPGA.

15. Dispositif selon la revendication précédente comprenant une deuxième électronique de traitement (36) capable de déterminer l'apparition d'un grippage ou la détérioration d'au moins une portion d'un élément d'un joint tubulaire lors de l'assemblage de deux composants filetés tubulaires selon au moins une loi temporelle de détection.

16. Dispositif selon la revendication précédente, dans lequel la première électronique d'acquisition (33) et la deuxième électronique de traitement (36) sont connectées par une liaison sans-fil de type Wifi ou Bluetooth ou une liaison filaire de type Ethernet.

17. Dispositif selon l'une des revendications 15 à 16 dans lequel la deuxième électronique de traitement comprend un logiciel de traitement et de stockage des mesures.

18. Méthode utilisant le dispositif selon l'une quelconque des revendications précédentes comprenant les étapes de :
- Déterminer un ensemble de valeurs T₀(i,j) représentatives de températures en une pluralité d'endroits E(i,j) de la surface extérieure d'une extrémité (11) de composant tubulaire au début de son assemblage avec un autre composant tubulaire correspondant ;
- Déterminer un autre ensemble de valeurs T(i,j) représentatives de températures en une pluralité d'endroits E(i,j) de la surface extérieure d'une extrémité (11) au cours de l'assemblage ;
- Calculer la différence entre la température en cours d'assemblage T(i,j) et la température au début d'assemblage T₀(i,j) pour chaque endroit E(i,j)
- Emettre un diagnostic de grippage lorsque la différence T(i,j) - T₀(i,j) dépasse un seuil ΔTₛₑᵤᵢₗ(i,j) prédéfini pour au moins un endroit E(i,j)

19. Méthode selon la revendication précédente comprenant l'étape de :
- calcul de la vitesse de variation de température V_{T}(i,j) pour au moins un ensemble d'endroits ΣE(i,j) ;
- Emettre un diagnostic de grippage lorsque la variation de température V_{T}(i,j) dépasse un seuil de variation prédéfini ΔV_{T}(i,j).

## Patentansprüche

1. Vorrichtung zur Bestimmung der Montagequalität einer Rohrverschraubung, umfassend:
- ein Gehäuse (2), das einen zylindrischen Innenraum (20) umfasst, der eine Achse (21) aufweist, und dazu eingerichtet ist, an einem Außenoberflächenabschnitt einer Gewinderohrkomponente montiert zu werden;
- mindestens ein Messorgan (3) zwischen dem Gehäuse (2) und dem Innenraum (20), das eine Kontaktschicht (4) umfasst, die eine Mehrzahl von Temperatursensoren (5) umfasst, die angeordnet sind, um Größen zu messen, die für die Temperaturen an einer Mehrzahl von Stellen E(i,j) der Außenoberfläche des Endes der Rohrkomponente repräsentativ sind;
- eine erste Erfassungselektronik (33), die mit der Mehrzahl von Sensoren (5) verbunden ist und in der Lage ist, mindestens einen Teil der von den Sensoren (5) generierten Signale zu verarbeiten.

2. Vorrichtung nach Anspruch 1, bei der mindestens ein Messorgan (3) eine Mehrzahl von Messstreifen (31) umfasst, die um die Achse (21) der Vorrichtung herum verteilt sind.

3. Vorrichtung nach einem der vorhergehenden Ansprüche, **dadurch gekennzeichnet, dass** die Vorrichtung eine Schraubführung für Ölförderungsrohrkomponenten ist.

4. Vorrichtung eines der vorhergehenden Ansprüche, **dadurch gekennzeichnet, dass** die Temperatursensoren (5) unter den Thermoelementen, den Thermistoren, den Mikrobolometern gewählt sind.

5. Vorrichtung eines der Ansprüche 1 bis 3, bei der die Temperatursensoren (5) in Matrizen (51) von Temperatursensoren (5) auf einem flexiblen Substrat verteilt sind.

6. Vorrichtung nach dem vorhergehenden Anspruch, bei der die Temperatursensoren (5) Thermistoren sind und das flexible Substrat aus Polyimid besteht.

7. Vorrichtung nach einem der vorhergehenden Ansprüche, **dadurch gekennzeichnet, dass** die Kontaktschicht (4) eine thermisch leitende und elektrisch isolierende Schicht umfasst, die zumindest teilweise zwischen den Temperatursensoren (5) und dem Innenraum (20) eingerichtet ist.

8. Vorrichtung nach einem der vorhergehenden Ansprüche, **dadurch gekennzeichnet, dass** die Kontaktschicht (4) eine Schutzschicht (41) umfasst, die dazu eingerichtet ist, die Temperatursensoren (5) zu schützen.

9. Vorrichtung nach dem vorhergehenden Anspruch, bei der die Schutzschicht (41) eine Stahlfolie ist, die so geformt ist, dass sie ein gerundetes Profil aufweist.

10. Vorrichtung nach einem der vorhergehenden Ansprüche, **dadurch gekennzeichnet, dass** die Vorrichtung eine dämpfende Schicht (9) zwischen dem Gehäuse (2) und der Kontaktschicht (4) umfasst.

11. Vorrichtung nach dem vorhergehenden Anspruch, **dadurch gekennzeichnet, dass** die dämpfende Schicht (9) elastische Mittel umfasst, die unter Garter-Federn, Clover-Dome-Tellerfedern, Federscheiben, konischen Unterlegscheiben, einem elastischen Material, einem Neoprenschaum oder Silikon gewählt sind.

12. Vorrichtung nach einem der Ansprüche 10 oder 11, **dadurch gekennzeichnet, dass** die dämpfende Schicht (9) ein starres profiliertes Element (92) umfasst.

13. Vorrichtung nach einem der vorhergehenden Ansprüche, wobei das Gehäuse (2) einen Positionierungsanschlag (7) umfasst.

14. Vorrichtung nach einem der vorhergehenden Ansprüche, bei der die erste Erfassungselektronik (33) eine Mehrzahl von elektronischen Erfassungseinheiten (34) umfasst, die mit einer Sammelelektronik (35) von der Art einer programmierbaren elektronischen Schaltung FPGA verbunden sind.

15. Vorrichtung nach dem vorhergehenden Anspruch, die eine zweite Verarbeitungselektronik (36) umfasst, die in der Lage ist, das Auftreten eines Festfressens oder die Beschädigung mindestens eines Abschnitts eines Elements einer Rohrverschraubung beim Montieren von zwei Gewinderohrkomponenten gemäß mindestens einem Erkennungszeitgesetz zu bestimmen.

16. Vorrichtung nach dem vorhergehenden Anspruch, bei der die erste Erfassungselektronik (33) und die zweite Verarbeitungselektronik (36) über eine drahtlose Verbindung vom Typ WLAN oder Bluetooth oder eine drahtgebundene Verbindung vom Typ Ethernet verbunden sind.

17. Vorrichtung nach einem der Ansprüche 15 bis 16, bei der die zweite Verarbeitungselektronik eine Software zum Verarbeiten und Speichern der Messungen umfasst.

18. Verfahren zur Verwendung der Vorrichtung nach einem der vorhergehenden Ansprüche, das die folgenden Schritte umfasst:
- Bestimmen einer Menge von Werten T₀(i,j), die für Temperaturen an einer Mehrzahl von Stellen E(i,j) der Außenoberfläche eines Endes (11) einer Rohrkomponente zu Beginn von deren Montage mit einer entsprechenden anderen Rohrkomponente repräsentativ sind;
- Bestimmen einer weiteren Menge von Werten T(i,j), die für Temperaturen an einer Mehrzahl von Stellen E(i,j) der Außenoberfläche eines Endes (11) während der Montage repräsentativ sind;
- Berechnen der Differenz zwischen der Temperatur während der Montage T(i,j) und der Temperatur bei Montagebeginn T₀(i,j) für jede Stelle E(i,j);
- Ausgeben einer Festfress-Diagnose, wenn die Differenz T(i,j) - T₀(i,j) für mindestens eine Stelle E(i,j) einen vorgegebenen Schwellenwert ΔT_{schwelle}(i,j) überschreitet.

19. Verfahren nach dem vorhergehenden Anspruch, das den folgenden Schritt umfasst:
- Berechnen der Temperaturänderungsgeschwindigkeit V_{T}(i,j) für mindestens eine Menge von Stellen ΣE(i,j);
Ausgeben einer Festfress-Diagnose, wenn die Temperaturänderung V_{T}(i,j) einen vorgegebenen Änderungsschwellenwert ΔV_{T}(i,j) überschreitet.

## Claims

1. Device for determining the assembly quality of threaded tubular components, comprising:
- a chassis (2) comprising a cylindrical internal space (20) having an axis (21) and arranged to be mounted on a portion of an external surface of a threaded tubular component;
- at least one measurement member (3) between the chassis (2) and the internal space (20) comprising a contact layer (4) comprising a plurality of temperature sensors (5) that are arranged to measure variables representative of temperatures at a plurality of points E(i,j) of the external surface of the end of the tubular component;
- a first set of acquisition electronics (33) that is connected to the plurality of sensors (5) and is able to process part at least of the signals generated by the sensors (5).

2. Device according to Claim 1, wherein at least one measurement member (3) comprises a plurality of measurement strips (31) distributed around the axis (21) of the device.

3. Device according to either of the preceding claims, **characterized in that** the device is a guide for screwing together tubular components for petroleum drilling.

4. Device of one of the preceding claims, **characterized in that** the temperature sensors (5) are chosen from among thermocouples, thermistors, microbolometers.

5. Device of one of Claims 1 to 3, wherein the temperature sensors (5) are distributed in arrays (51) of temperature sensors (5) on a flexible substrate.

6. Device according to the preceding claim, wherein the temperature sensors (5) are thermistors and the flexible substrate is made of polyimide.

7. Device according to one of the preceding claims, **characterized in that** the contact layer (4) comprises a thermally conductive and electrically insulating layer arranged at least in part between the temperature sensors (5) and the internal space (20).

8. Device according to one of the preceding claims, **characterized in that** the contact layer (4) comprises a protective layer (41) that is arranged to protect the temperature sensors (5).

9. Device according to the preceding claim, wherein the protective layer (41) is a steel sheet shaped so as to have a rounded profile.

10. Device according to one of the preceding claims, **characterized in that** the device comprises a cushioning layer (9) between the chassis (2) and the contact layer (4).

11. Device according to the preceding claim, **characterized in that** the cushioning layer (9) comprises elastic means chosen from among garter springs, Clover dome spring washers, wave washer, a dome spring, an elastic material, a silicone or neoprene foam.

12. Device according to either of Claims 10 and 11, **characterized in that** the cushioning layer (9) comprises a profiled rigid element (92).

13. Device according to one of the preceding claims, in which the chassis (2) comprises a positioning stop (7) .

14. Device according to one of the preceding claims, wherein the first set of acquisition electronics (33) comprises a plurality of acquisition electronics units (34) connected to a set of collection electronics (35) of the FPGA programmable electronic circuit type.

15. Device according to the preceding claim, comprising a second set of processing electronics (36) that is capable of determining the occurrence of the seizing or the deterioration of at least one portion of an element of a tubular joint during assembly of two tubular threaded components according to at least one temporal detection law.

16. Device according to the preceding claim, wherein the first set of acquisition electronics (33) and the second set of processing electronics (36) are connected by a wireless connection of Wi-Fi or Bluetooth type, or a wired connection of Ethernet type.

17. Device according to either of Claims 15 and 16, wherein the second set of processing electronics comprises software for processing and storage of the measurements.

18. Method using the device according to any one of the preceding claims, comprising the steps of:
- determining a set of values T₀(i, j) representative of temperatures at a plurality of points E(i,j) of the external surface of an end (11) of a tubular component at the start of its assembly to another, corresponding tubular component;
- determining another set of values T(i,j) representative of temperatures at a plurality of points E(i,j) of the external surface of an end (11) during assembly;
- calculating, for each point E(i,j), the difference between the temperature during assembly T(i, j) and the temperature at the start of assembly T₀(i, j);
- transmitting a seizure diagnosis when the difference T (i, j) - T₀(i, j) exceeds a predefined threshold ΔT_{threshold}(i, j) for at least one point E(i,j).

19. Method according to the preceding claim, comprising the step of:
- calculating the rate of change of temperature V_{T}(i, j) for at least one set of points ΣE(i, j);
- transmitting a seizure diagnosis when the temperature change V_{T}(i, j) exceeds a predefined change threshold ΔV_{T}(i, j).
